# FASCICULE DE BREVET EUROPEEN

(11) **EP 3 555 551 B1**
(45) Date de publication et mention de la délivrance du brevet: **22.07.2020**
(21) Numéro de dépôt: 17809329.0
(22) Date de dépôt: 11.12.2017
(51) Int. Cl.: F41H 5/26, G02B 23/08

(54) **APPAREIL DE VISÉE POUR VÉHICULE ET VÉHICULE ASSOCIÉ**
VISIERVORRICHTUNG FÜR FAHRZEUG UND ZUGEHÖRIGES FAHRZEUG
SIGHTING DEVICE FOR VEHICLE AND ASSOCIATED VEHICLE

(30) Priorité: 13.12.2016 FR 1601767
(43) Date de publication de la demande: 23.10.2019
(73) Titulaire: Thales, 92400 Courbevoie (FR)
(72) Inventeur: THIBOUT, Paul, 78995 Elancourt Cedex (FR)
(74) Mandataire: Lavoix
(86) Numéro de dépôt international: PCT/EP2017/082274
(87) Numéro de publication internationale: WO 2018/108836

(56) Documents cités:
- EP-A1- 1 467 237
- WO-A1-2015/144919
- FR-A1- 2 584 202

## Description

La présente invention concerne un appareil de visée. La présente invention se rapporte également à un véhicule équipé d'un tel appareil de visée.

La présente invention se rapporte au domaine des véhicules terrestres ayant besoin de réaliser une observation de l'environnement. Pour le domaine militaire, une telle observation est mise en oeuvre dans les chars d'assaut à l'aide d'appareils de visée utilisés notamment pour effectuer des tirs.

Il est connu des appareils de visée comportant une partie optronique munie de senseurs pouvant se mouvoir par rapport à un support. De tels appareils de visée sont positionnés au-dessus du blindage et sont qualifiés de « above armour » (de l'anglais « au-dessus de l'armure »).

Toutefois, de tels appareils de visée ne procurent pas de vision optique directe de la scène. Une telle vision est indispensable en cas de dysfonctionnement des senseurs optroniques.

Un autre type d'appareils de visée, dit « viseur traversant » propose l'emploi d'un système de visée tel un monoculaire ou un binoculaire positionné dans le véhicule. L'accès à l'environnement se fait alors en vision directe à travers une ouverture pratiquée dans la paroi du véhicule.

Néanmoins, un tel appareil de visée est généralement encombrant et implique une ouverture de grande dimension dans la paroi du véhicule, en particulier dans le cas où il est souhaité de dédoubler les système de visée pour que le chef d'équipage du véhicule dispose de son propre système de visée.

Il est également connu du document FR 2 584 202 A1 un appareil de visée stabilisé comprenant une caméra sensible à l'infrarouge thermique portée par une plateforme montée rotative autour d'un premier axe sur un équipage mobile en rotation sur une plateforme autour d'un second axe perpendiculaire au premier, la caméra étant munie d'un système inertiel de stabilisation autour des deux axes. L'appareil comporte également un viseur optique qui comprend un miroir de pointage monté sur l'équipage et entraîné en rapport ½ en rotation autour d'un axe parallèle au premier et une optique de décalage qui renvoie le faisceau lumineux réfléchi par le miroir de pointage.

Des appareils de visée similaires sont également connus des documents WO 2015/144919 A1 et EP 1 467 237 A1.

Plus précisément, le document WO 2015/144919 A1 décrit un viseur optronique à blindage modulable, comprenant un dispositif optronique, un palier comprenant une partie rotative portant le dispositif optronique, des moyens d'entraînement coopérant avec le palier pour entraîner en rotation la partie rotative, des moyens de pilotage adaptés à piloter les moyens d'entraînement, un blindage modulable adapté à être porté par la partie rotative du palier. Le viseur optronique comporte des moyens de détection du blindage reliés aux moyens de pilotage qui sont agencés pour adapter le pilotage des moyens d'entraînement en fonction du résultat de la détection.

Quant au document EP 1 467 237 A1, il décrit un dispositif ayant une voie purement optique pour transmettre une image, dans lequel une tête de périscope est monté rotative selon son axe vertical.La voie optique a un conducteur d'image comportant au moins 1 millions et préférablement 5 millions de fibres optiques. Les dimensions du conducteur d'image sont comprises au moins entre 15 x 15 millimètres (mm), de préférence 25 x 25 mm.Toutefois, la masse du miroir perturbe l'inertie de l'appareil, ce qui résulte en un appareil moins stable, ainsi un tel appareil de visée implique l'utilisation d'une masse inertielle pour stabiliser la visée de la tête optronique qui est réalisée par la masse de la caméra infrarouge.

Il existe donc un besoin pour un appareil de visée permettant à un opérateur de visualiser directement la scène entourant un véhicule présentant une meilleure compacité et une meilleure stabilité.

Selon l'invention, ce but est atteint par un appareil de visée pour véhicule, le véhicule comportant une paroi délimitant un espace intérieur d'un espace extérieur, l'appareil de visée comportant un support monté rotatif par rapport à la paroi autour d'un premier axe, le support définissant un volume intérieur, une tête optronique d'observation indirecte d'une première partie de l'environnement de l'espace extérieur du véhicule, la tête optronique étant montée rotative sur le support autour d'un deuxième axe, le deuxième axe étant perpendiculaire au premier axe, une voie optique directe d'observation d'une deuxième partie de l'environnement de l'espace extérieur du véhicule, la voie optique comprenant une optique de collection propre à collecter une partie de l'environnement de l'espace extérieur du véhicule, l'optique de collection étant rotative autour du deuxième axe, et un système optique de transport propre à transporter l'image collectée par l'optique de collection vers au moins un endroit prédéfini dans l'espace intérieur, le système optique de transport comportant une pluralité de composants optiques, une partie des composants étant dans l'espace intérieur et l'autre partie des composants étant dans le volume intérieur du support. L'appareil de visée comportant un entraînement entraînant la tête optronique et l'optique de collection pour que, lorsque la tête optronique effectue une rotation d'un premier angle donné autour du deuxième axe, l'optique de collection effectue une rotation d'un deuxième angle donné autour du deuxième axe, le rapport entre les deux angles étant compris entre 0,99 et 1,01, de préférence égal à 1.

Suivant des modes de réalisation particuliers, l'appareil de visée comprend une ou plusieurs des caractéristiques suivantes, prises isolément ou suivant toutes les combinaisons techniquement possibles :
- l'optique de collection est auto-inertielle vis-à-vis de la stabilisation autour de l'axe.
- il est défini pour l'image obtenue à l'endroit prédéfini une orientation, le système optique de transport comprenant un dérotateur agencé pour que l'image obtenue à l'endroit prédéfini présente la même orientation pour toutes les orientations possibles du support et de l'entraînement.
- la voie optique directe comporte au moins deux unités, chaque unité assurant une fonction spécifique pour l'appareil de visée, chaque unité ayant une entrée, le système optique de transport comportant un commutateur permettant de sélectionner l'un des endroits prédéfinis vers lesquels le système optique de transport est propre à transporter l'image collectée par l'optique de collection pour que chaque endroit prédéfini soit une entrée d'une unité pour laquelle la fonction spécifique a été sélectionnée ;
- les unités assurant une fonction spécifique pour l'appareil de visée sont choisies dans le groupe constitué d'une unité de visualisation, d'un oculaire, d'un monoculaire, d'un binoculaire, d'un écran organique, d'un laser et d'une caméra.
- le système de transport est configuré pour que le faisceau optique entre les composants dans l'espace intérieur et les composants dans le volume intérieur soit un faisceau optique parallèle.
- il est défini une direction en site et une direction en gisement, le premier axe étant parallèle à la direction en gisement et le deuxième axe étant parallèle à la direction en site.

L'invention concerne aussi un véhicule comportant un appareil de visée tel que défini précédemment.

Selon un mode de réalisation particulier, le système optique de transport comporte un hublot, le hublot ayant un diamètre inférieur ou égal à 100 millimètres utile optiquement, la paroi comportant également le hublot, le hublot assurant l'étanchéité de la paroi vis-à-vis de l'espace extérieur.

D'autres caractéristiques et avantages de l'invention apparaîtront à la lecture de la description qui suit de modes de réalisation de l'invention, donnée à titre d'exemple uniquement, et en référence aux dessins qui sont :
- figure 1, une vue schématique d'un véhicule pourvu d'un exemple d'appareil de visée ;
- figure 2, une vue de côté d'une coupe d'un appareil de visée de la figure 1 ;
- figure 3, une vue schématique de côté de l'appareil de visée de la figure 1 ;
- figure 4, une vue en coupe de l'appareil de visée de la figure 1 ;
- figure 5, une vue schématique vue de haut d'un exemple de l'appareil de visée, et
- figure 6, une vue schématique d'un autre exemple de l'appareil de visée.

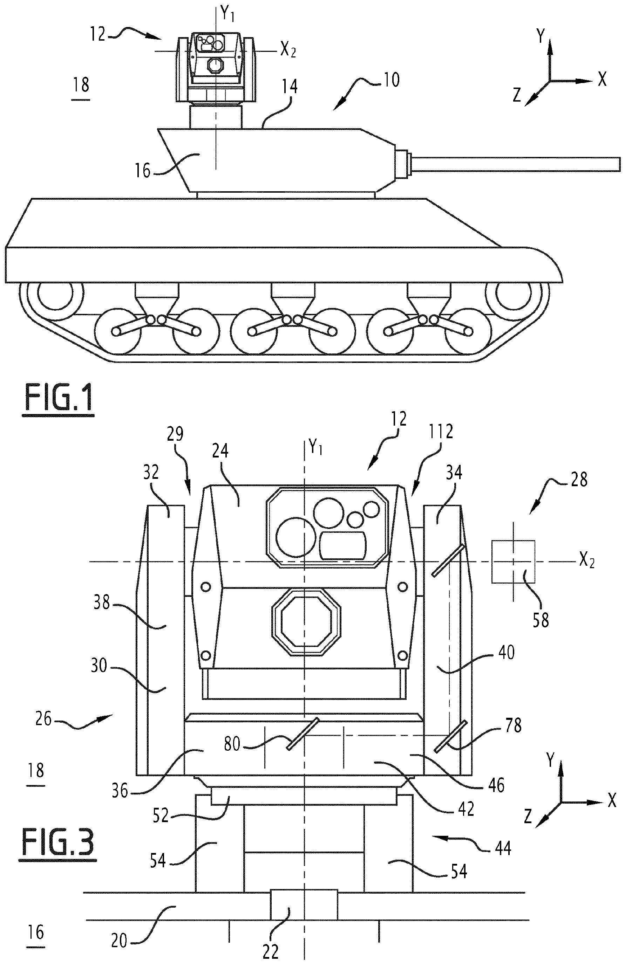

La figure 1 représente un véhicule 10 muni d'un appareil de visée 12.

Le véhicule 10 est un véhicule terrestre.

Par exemple, le véhicule 10 est un véhicule de type militaire tel qu'un char d'assaut.

Un tel véhicule 10 est adapté à comporter une pluralité d'armes et à protéger au moins un opérateur installé à l'intérieur du véhicule 10. Par exemple, le véhicule 10 est muni d'un canon de tir.

Le véhicule 10 comporte une paroi 14 délimitant un espace intérieur 16 d'un espace extérieur 18.

Plus précisément, dans le contexte militaire, l'espace intérieur 16 est l'espace à sécuriser puisqu'il s'agit de l'espace dans lequel vont évoluer le ou les opérateurs alors que l'espace extérieur 18 est le théâtre d'opérations dans lequel la sécurité est plus difficile à assurer selon l'environnement considéré.

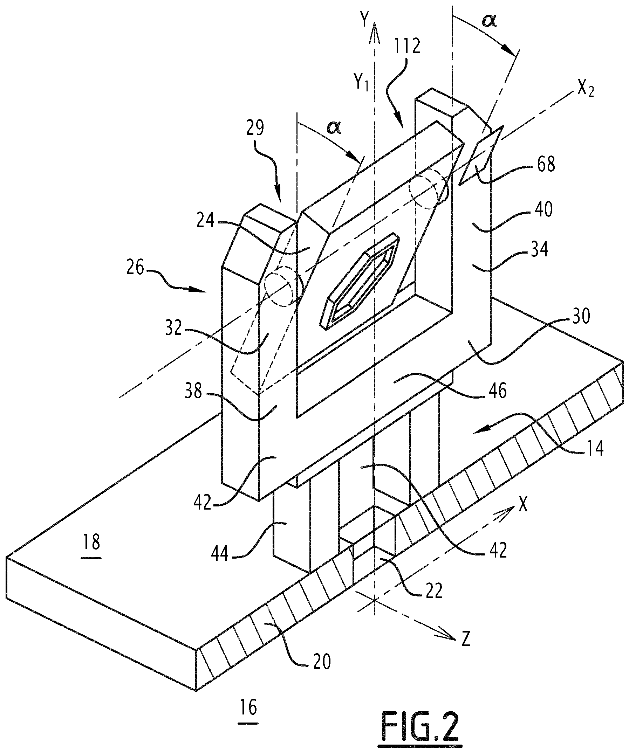

La paroi 14 comporte deux parties 20 et 22, notamment visibles sur la figure 2.

La première partie 20 de la paroi 14 est réalisée dans un premier matériau opaque.

Typiquement, le premier matériau opaque est suffisamment résistant pour former un blindage du véhicule 10, le véhicule 10 devant résister à des tirs.

La deuxième partie 22 de la paroi 14 est réalisée dans un deuxième matériau transparent.

L'appareil de visée 12 est décrit plus précisément en référence aux figures 2 à 4. Par commodité, il est défini des directions.

Une direction normale à la paroi 14 est symbolisée par un axe Y sur la figure 2. Cette direction correspond à la direction de gisement et sera dénommée direction de gisement Y dans la suite de la description.

Il est également défini une première direction transversale située dans le plan de la figure 2, la première direction transversale étant perpendiculaire à la direction de gisement. Cette direction est symbolisée par un axe X sur la figure 2. Cette direction correspond à la direction de site et sera dénommée direction de site X dans la suite de la description.

Il est également défini une deuxième direction transversale symbolisée par un axe Z sur la figure 2. La deuxième direction transversale Z est perpendiculaire à la direction de gisement Y et à la direction de site X.

L'appareil de visée 12 comporte une tête optronique 24, un support 26, une voie optique directe 28 et un entraînement 29.

La tête optronique 24 est une tête optronique d'observation d'une partie de l'environnement de l'espace extérieur 18 du véhicule 10.

La tête optronique 24 comporte, par exemple, des caméras propres à capter la lumière visible, en noir et blanc et/ou en couleur, des caméras infrarouges, des télémètres, ou encore des pointeurs. Les vidéos et les données collectées par la tête optronique sont transmises vers l'intérieur du véhicule 10 par l'intermédiaire de signaux analogiques et/ou numériques.

Le support 26 est destiné à maintenir la tête optronique 24 mobile par rapport à un deuxième axe X2. La tête optronique 24 est montée rotative sur le support 26 autour du deuxième axe X2.

Selon l'exemple illustré, le deuxième axe X2 est parallèle à la direction en site X.

Le support 26 comporte une paroi qui permet de délimiter un volume intérieur 30.

Le support 26 est mobile autour d'un premier axe Y1, le premier axe Y1 étant parallèle à la direction de gisement Y.

Plus précisément, le support 26 comporte deux bras latéraux 32 et 34, et un socle 36.

Les deux bras latéraux 32 et 34, et le socle 36 sont agencés pour former une pièce sensiblement en forme de U.

Dans l'exemple particulier de la figure 2, les deux bras latéraux 32 et 34 sont identiques.

Chacun des deux bras latéraux 32 et 34 est situé de part et d'autre de la tête optronique 24 pour assurer le maintien de la tête optronique 24.

Chacun des bras latéraux 32 et 34 s'étend principalement le long de la direction de gisement Y.

La paroi de chaque bras latéral 32 et 34 est en alliage à base d'aluminium.

Pour chacun des bras latéraux 32 et 34, il est défini un volume intérieur 38 et 40.

Selon l'exemple représenté, chaque bras latéral 32 et 34 présente une forme sensiblement parallélépipédique.

Le socle 36 présente deux parties : une partie centrale 42 reliant les deux bras latéraux 32 et 34 et une partie d'interfaçage 44 avec la paroi 14.

La partie centrale 42 est évidée de sorte qu'un volume central 46 peut également être défini pour la partie centrale 42.

En l'occurrence, le volume intérieur 30 du support 26 est donc la somme des volumes latéraux 38 et 40 et du volume central 46.

La partie d'interfaçage 44 est une interface mécanique ayant, selon le cas de la figure 3, une forme de cylindre avec une partie centrale évidée, la partie d'interfaçage délimitant un volume intérieur 54.

La partie d'interfaçage 44 supporte une interface 52 délimitant un volume intérieur. La forme de l'interface 52 est choisie de sorte à s'adapter à la forme de la tête optronique 24.

Le volume délimité par la somme du volume intérieur de l'interface 52 et du volume central 46 de la partie centrale 42 comporte des moteurs, des résolveurs destinés à commander les moteurs, ainsi qu'un joint tournant électrique et/ou une fibre optique propres à transmettre des signaux ou données entre la tête optronique 24 et l'intérieur du véhicule 10.

Les moteurs sont propres à entraîner un mouvement de rotation du support 26 par rapport à la paroi 14 autour du premier axe Y1.

La partie d'interfaçage 44 est, selon les modes de réalisation, fixe ou élévatrice. Dans le cas de la figure 3, la partie d'interfaçage 44 est fixe.

La voie optique directe 28 est propre à observer une partie de l'environnement de l'espace extérieur 18 du véhicule 10.

Le terme « directe » est à mettre au regard du terme « indirecte ».

De fait, il est entendu par vision directe une vision possible par l'être humain en direct, alors qu'une vision indirecte est une vision via un écran qui suppose le fonctionnement de l'ensemble des éléments intervenant dans la visualisation de la scène sur l'écran.

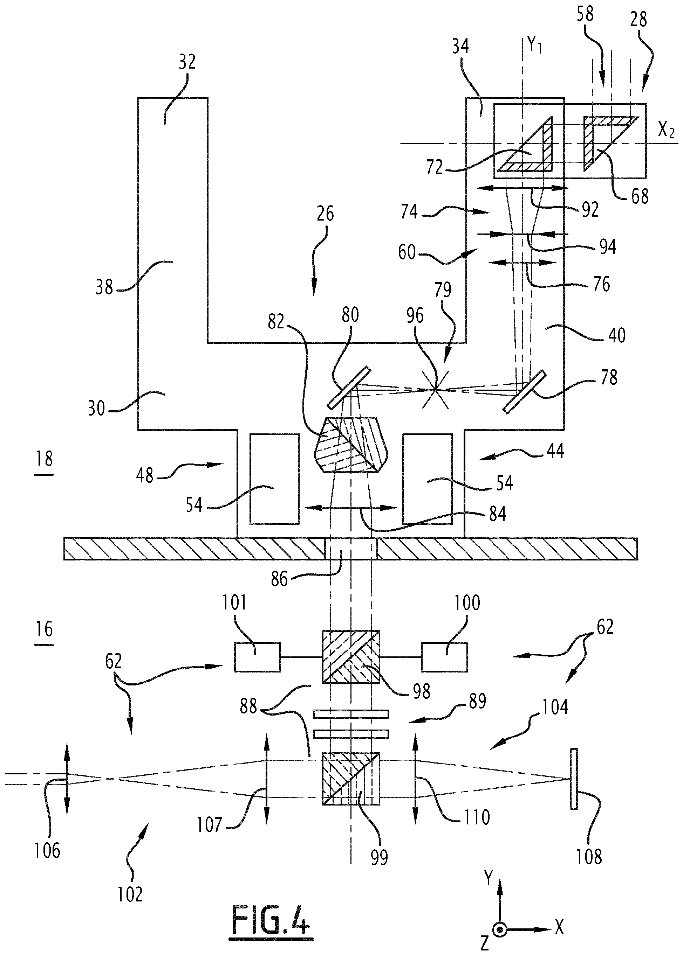

En référence à la figure 4, la voie optique directe 28 comporte une optique de collection 58, un système optique de transport 60 et une pluralité d'unités 62.

L'optique de collection 58 est agencée pour collecter une partie de l'environnement de l'espace extérieur 18 du véhicule 10.

Selon l'exemple représenté, l'optique de collection 58 est un premier prisme 68.

En variante, l'optique de collection 58 est un miroir plan porté par le bras 34 du support 26.

L'optique de collection 58 est montée rotative par rapport au bras 34 du support 26 autour du deuxième axe X2.

Le système optique de transport 60 est propre à transporter une image collectée par l'optique de collection 58 vers un ou plusieurs endroits prédéfinis dans l'espace intérieur 16.

L'optique de collection 58 est auto-inertielle vis-à-vis de la stabilisation autour du deuxième axe X2. Autrement formulé, l'optique de collection 58 est configurée pour que, lors d'un déplacement du véhicule 10 entraînant une vibration mécanique du support 26, l'optique de collection 58 demeure sensiblement immobile en rotation autour du deuxième axe X2.

L'optique de collection 58 présente un moment d'inertie supérieur à un moment d'inertie seuil, le moment d'inertie seuil correspondant à une stabilité en rotation de 0,1° pour une rotation de 10° autour du deuxième axe X2.

Le système optique de transport 60 comporte une pluralité de composants optiques.

Par composant optique, dans ce contexte, il est entendu des composants optiques permettant une visée directe de l'opérateur.

De ce fait, une caméra ou tout autre dispositif électronique ne peut pas être considéré comme un composant optique.

Une partie des composants optiques est dans l'espace intérieur 16 du véhicule 10 et l'autre partie des composants est dans le volume intérieur 30 du support 26.

Chaque composant sert à propager la lumière ou à contrôler sa direction ou à empêcher son passage, notamment s'il s'agit d'obturateurs.

Dans la suite, il est décrit le montage particulier de la figure 4, sachant que d'autres montages assurant la même fonction sont bien entendu envisageables.

Dans l'exemple particulier de la figure 4, le système optique de transport 60 comporte un deuxième prisme 72, une lunette de Galilée 74, une première lentille 76, un premier miroir de renvoi 78, une lentille de champ 79, un deuxième miroir de renvoi 80, un dérotateur 82, une deuxième lentille 84, un hublot 86, un commutateur 88 et un système d'obturation 89.

Les composants précédents ont été présentés dans un ordre précis, depuis l'amont vers l'aval, l'amont étant défini comme l'endroit où le système de transport 60 reçoit l'image extérieure collectée par l'optique de collection 58 et l'aval comme l'endroit jusqu'où le système de transport 60 a transporté l'image d'une partie de l'espace extérieur 18 collectée par l'optique de collection 58, c'est-à-dire le ou chaque endroit prédéfini dans l'espace intérieur 16.

Le volume latéral 40 du bras 34 s'étend principalement selon la direction de gisement Y.

Le volume latéral 40 comprend un plan médian s'étendant selon les directions transversales X et Z et défini comme le plan séparant le volume latéral 40 en deux parties de volume égal s'étendant selon la direction de gisement Y, à savoir une partie supérieure située au-dessus du plan médian, et une partie inférieure située en dessous du plan médian.

Le deuxième prisme 72 est positionné dans la partie supérieure du volume intérieur 40 du bras latéral 34.

Le deuxième prisme 72 est un prisme droit.

Le deuxième prisme 72 est réalisé en un matériau choisi pour permettre la transmission d'un flux optique compatible avec la bande passante optique utilisée par la voie optique directe 28.

Le deuxième prisme 72 est fixe.

Le deuxième prisme 72 est propre à renvoyer le faisceau du premier prisme 68 qui forme l'optique de collection 58, en direction de la lunette de Galilée 74.

Selon un autre mode de réalisation, le deuxième prisme 72 est remplacé par un miroir plan formant un angle de 45° avec la direction de gisement a direction de gisement Y.

La lunette de Galilée 74 se situe dans la partie supérieure du volume intérieur 40 du bras latéral 34.

Selon l'exemple particulier de la figure 4, la lunette de Galilée 74 comporte deux groupes de lentilles, un premier groupe de lentilles 92 et un deuxième groupe de lentilles 94.

La lunette de Galilée 74 est propre à ajuster la taille du faisceau incident.

La lunette de Galilée 74 présente des grossissements adaptés au type de scène à observer.

La première lentille 76 s'étend selon la direction de site X, dans le plan médian du volume intérieur 40.

La première lentille 76 est propre à générer une image d'une partie de l'environnement extérieur observé, à partir de l'image collectée et à pouvoir intégrer dans l'image générée, un réticule 96 accolé à la lentille de champ 79.

Selon l'exemple représenté, le premier groupe de lentilles 76 est une lentille convergente.

Le premier miroir 78 est un miroir plan situé dans la partie inférieure du volume intérieur 40 du bras latéral 34.

Le deuxième miroir 80 est un miroir plan situé dans le volume central de la partie centrale 42 du support 26.

Les deux miroirs de renvoi 78 et 80 sont agencés de sorte que le faisceau traversant le bras latéral 34 soit renvoyé dans la partie centrale 42 parallèlement à la direction de gisement Y.

Entre les deux miroirs de renvoi 78 et 80, le faisceau converge en un point de focalisation. Le réticule 96 et la lentille de champ 79 sont placés au point de focalisation.

La lentille de champ 79 permet d'optimiser le champ de pleine lumière et le réticule 96 permet de faciliter la visée.

Selon une variante, la lentille de champ 96 est dépourvue de réticule.

Le dérotateur 82 est formé par l'assemblage de deux prismes séparés par une lame d'air et agencés pour former un prisme de Pechan.

Selon une variante, le dérotateur 82 est positionné avant la lentille 84.

Cela permet que le faisceau optique entre les composants dans l'espace intérieur 16 et les composants dans le volume intérieur 30 soit un faisceau optique convergent.

En variante, tout autre type de dérotateur 82 est envisageable, et est positionné soit avant la lentille 84, soit après la lentille 84. Par exemple, le dérotateur 82 est un prisme de Dove. Dans ce cas, le dérotateur 82 est positionné dans une zone où le faisceau optique est un faisceau optique parallèle.

Le dérotateur 82 est agencé pour obtenir à le ou chaque endroit défini, une image avec la même orientation, indépendamment des mouvements de rotation de la tête optronique 24 et du support 26.

La deuxième lentille 84 est intercalée entre le hublot 86 et le dérotateur 82.

La deuxième lentille 84 est agencée pour que le faisceau optique transmis à l'espace intérieur 16 à travers le hublot 86 soit un faisceau optique parallèle.

Le hublot 86 forme la deuxième partie 22 de la paroi 14 délimitant l'espace intérieur 16 de l'espace extérieur 18.

Le hublot 86 est réalisé en matériau transparent dans le spectre visible (rayonnement dont la longueur d'onde comprise entre 400 nanomètres et 800 nanomètres), ainsi que dans les domaines suivants : proche infrarouge (aussi désigné par l'acronyme PIR) et infrarouge court (aussi désigné par l'acronyme SWIR).

Le hublot 86 est agencé pour laisser passer l'image transportée par le système optique de transport 60 entre l'espace extérieur 18 et l'espace intérieur 16.

Le hublot 86 a un diamètre inférieur ou égal à 100 millimètres et est destiné à assurer l'étanchéité de la paroi 14 vis-à-vis de l'espace extérieur 18. Le diamètre indiqué correspond au diamètre utile optiquement, c'est-à-dire à la portion de hublot 86 destinée au passage de faisceaux optiques

Selon une variante, la voie optique directe 28 ne comporte pas de hublot d'étanchéité.

Pour la partie des composants optiques faisant partie de l'espace intérieur 16, dans l'exemple présenté, le système optique de transport 60 comprend un commutateur 88 comportant un premier cube 98 et un deuxième cube 99.

Selon une variante, les cubes 98 et 99 sont des lames à faces parallèles.

Le commutateur 88 est propre à sélectionner l'un des endroits prédéfinis vers lesquels le système optique de transport 60 va diriger l'image collectée. Dans l'exemple de la figure 4, une telle sélection est réalisée par les deux cubes 98 et 99.

Selon l'exemple de la figure 4, le premier cube 98 est en interaction avec deux endroits prédéfinis.

On entend ici par « en interaction » la capacité d'un cube à transporter l'image collectée vers l'endroit prédéfini.

Le deuxième cube 99 est en interaction avec deux autres endroits prédéfinis.

Le système d'obturation 89 est interposé entre les cubes 98 et 99.

Le système d'obturation 89 comprend une pluralité d'obturateurs, dont deux sont représentés sur la figure 4.

Chaque obturateur s'étend principalement selon la direction de site X.

Le système d'obturation 89 permet de protéger l'opérateur du véhicule 10 des faisceaux lasers externes et internes, et permet également le contrôle du flux de scène.

Dans l'exemple présenté, chaque unité 62 comporte une entrée et remplit une fonction.

Chaque endroit prédéfini correspond à une entrée d'une unité 62. Pour l'exemple décrit, il est donc possible de considérer que le premier cube 98 est en interaction avec une première unité 100 et une deuxième unité 101 tandis que le deuxième cube 99 est en interaction avec une troisième unité 102 et une quatrième unité 104.

De manière générale, les unités 62 assurent une fonction spécifique pour l'appareil de visée 12 et le commutateur 88 permet de sélectionner l'un des endroits prédéfinis vers lesquels le système optique de transport 60 est propre à transporter l'image collectée par l'optique de collection 58 pour que chaque endroit prédéfini soit une entrée d'une unité 62 pour laquelle la fonction spécifique a été sélectionnée.

Les unités 62 assurent une fonction spécifique pour l'appareil de visée 12 et sont choisies dans le groupe constitué de : une unité de visualisation, un oculaire, un monoculaire, un binoculaire, un écran organique, un laser, et une caméra.

Dans l'exemple décrit, la première unité 100 est un système d'éblouissement.

Le système d'éblouissement 100 est un laser de puissance suffisamment puissant pour assurer l'éblouissement d'une cible potentielle.

La deuxième unité 101 est un capteur propre à assurer une observation électronique supplémentaire.

La troisième unité 102 est un binoculaire 102 permettant à l'opérateur de regarder avec ses yeux, le binoculaire 102 servant à ajuster les tailles du faisceau.

Selon l'exemple de la figure 4, le binoculaire 102 comporte deux lentilles 106 et 107 et un système de séparation de faisceaux non représenté propre à diriger le faisceau optique en direction de chacun des oculaires du binoculaire 102.

La quatrième unité 104 comporte un écran 108 de type écran OLED (sigle de « Organic Light-Emitting Diode » signifiant en français « diode électroluminescente organique ») ainsi qu'une optique de focalisation 110.

La résolution de l'écran 108 est compatible avec les matrices senseurs des différentes caméras utilisées.

L'entraînement 29 est propre à entraîner un mouvement de rotation de la tête optronique 24 et de l'optique de collection 58 autour du deuxième axe X2.

L'entraînement 29 est propre à entraîner la tête optronique 24 et l'optique de collection 58 pour que, lorsque la tête optronique 24 effectue une rotation d'un premier angle α donné autour du deuxième axe X2, l'optique de collection 58 effectue une rotation d'un deuxième angle donné autour du deuxième axe X2, le rapport entre les deux angles étant compris entre 0,99 et 1,01, de préférence égal à 1.

L'entraînement 29 est, par exemple, réalisé par un moteur solidaire d'un arbre d'entraînement 112 qui s'étend le long du deuxième axe X2.

L'optique de collection 58 est reliée à un prolongement de l'arbre d'entraînement 112 au niveau du volume intérieur 40 du bras latéral droit 34 du support 26.

Selon une variante, l'entrainement 29 est réalisé par deux moteurs ou résolveurs. Le premier moteur est solidaire de l'arbre d'entraînement 112, et est propre à commander un mouvement de rotation de la tête optronique 24. Le second moteur est propre à commander un mouvement de rotation de l'optique de collection 58, et est configuré pour reproduire les commandes du premier moteur. Cette configuration correspond à un asservissement du second moteur en suiveur du premier moteur.

Le fonctionnement de l'appareil de visée 12 va maintenant être décrit.

En fonctionnement, l'appareil de visée 12 a plusieurs fonctions : d'une part, grâce à la tête optronique 24, l'appareil de visée 12 permet d'observer une partie de la scène en utilisant différentes caméras pouvant réaliser des images dans différentes bandes spectrales grâce aux différentes caméras, comme par exemple dans le spectre visible, et dans l'infrarouge (rayonnement dont la longueur d'onde est comprise entre 800 nanomètres et 14 micromètres). Les caméras permettent notamment de réaliser des images dans les domaines suivants : PIR, SWIR, IR2 (longueur d'onde comprise entre 3 micromètres et 5 micromètres) et IR3 (longueur d'onde comprise entre 7,5 micromètres et 14 micromètres).

Lorsque l'opérateur commande une rotation autour du premier axe Y1 du support 26 maintenant la tête optronique 24, le support tourne et l'observateur peut observer une autre partie de la scène.

En cas de panne de la tête optronique 24, l'opérateur peut utiliser la voie directe 28 par exemple via une unité 62 propre à la visualisation de la scène telle que le binoculaire 102. Comme cela, l'opérateur observe à l'œil nu la scène et peut continuer sa mission.

En cas de panne de courant véhicule, le support 26, peut sous contrôle de l'opérateur, se positionner automatiquement en « gisement zéro » (position de simbleautage avec le canon de tir) et se verrouille grâce à une batterie de secours et l'opérateur peut encore utiliser la voie directe 28 pour visualiser la scène.

Selon une variante, le support 26 est relié au canon du véhicule 10. Dans ce cas, lors d'une panne de courant véhicule, le canon du véhicule 10 entraîne via une liaison mécanique, un mouvement du dérotateur 82 avec un rapport ½ et un mouvement de l'optique de collection 58 avec un rapport 1. Cet entraînement par liaison mécanique est configuré pour positionner le gisement du support 26 en position « gisement zéro », simbleauté au canon.

Lorsque l'opérateur commande une rotation de la tête optronique autour du deuxième axe X2, l'entraînement 29 entraine la tête optronique 24 et l'optique de collection 58, pour que la tête optronique 24 effectue une rotation d'un premier angle autour du deuxième axe X2, l'angle correspondant à la commande de l'opérateur, et pour que lorsque la tête optronique 24 effectue la rotation, l'optique de collection 58 effectue une rotation d'un deuxième angle donné autour du deuxième axe X2, le rapport entre les deux angles étant compris entre 0,99 et 1,01, de préférence égal à 1.

Au cours du mouvement de rotation, l'image collectée par l'optique de collection 58 présente une orientation variable. Lorsque l'image parvient jusqu'au dérotateur 82, elle est réorientée par le dérotateur 82 afin que l'image collectée parvienne aux endroits prédéfinis avec la même orientation, malgré la rotation de l'optique de collection 58 et la rotation du support 26 autour du premier axe Y1.

L'opérateur dispose aussi de la possibilité d'utiliser un laser 100 pour détecter, éblouir, voire détruire une optique pointée.

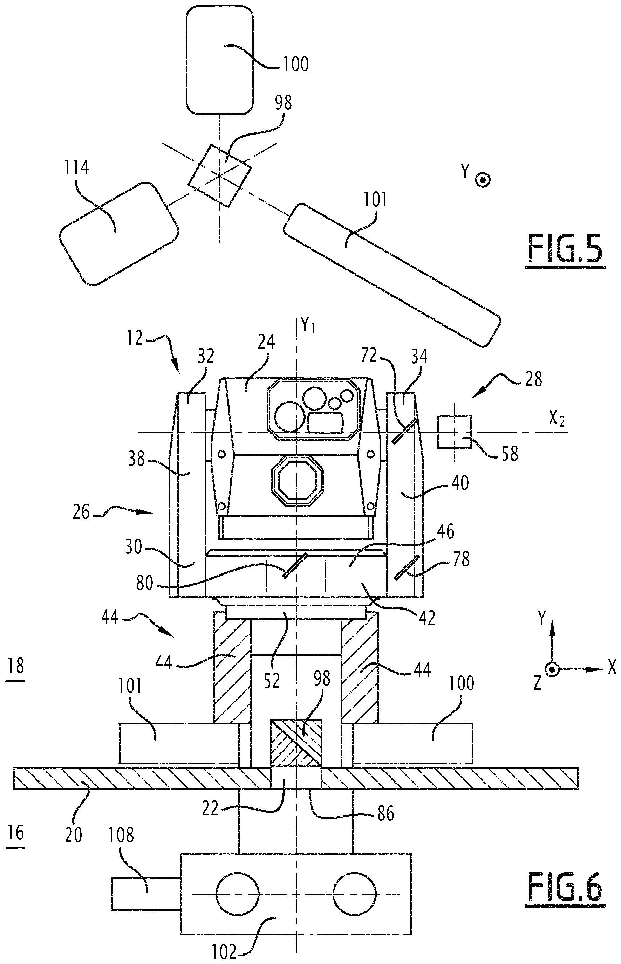

En variante, comme illustré par la figure 5, l'appareil de visée 12 peut être muni d'une pluralité de capteurs installés dans la zone située dans l'espace intérieur 16, après la lentille 84 où le faisceau est un faisceau optique parallèle.

Selon l'exemple de la figure 5, l'espace intérieur 16 est réparti équitablement en trois zones, une zone pour le système laser 100, une autre zone pour le premier capteur 101 et une autre zone pour un deuxième capteur 114.

Bien entendu, des configurations avec un nombre d'unités 62 supérieur, notamment plus de capteurs seraient envisageables.

Selon un autre exemple, comme illustré par la figure 6, les capteurs et/ou le système d'éblouissement 100 sont dans l'espace extérieur 18, accolés à la paroi 14.

Dans cet exemple, la partie d'interfaçage 44 est agencée pour permettre que le cube 98, positionné dans l'espace extérieur 18, soit en interaction avec le système d'éblouissement 100, et avec le capteur 101.

Cela permet de dégager de l'espace dans l'espace intérieur 16 pour disposer d'autres systèmes volumineux dans l'espace intérieur 16. Par comparaison, les équipements occupent moins de place dans l'espace intérieur du véhicule 10 qu'un viseur dit traversant avec voie directe optique.

Dans un autre mode de réalisation, seul le système d'éblouissement 100 est positionné à l'extérieur vers l'espace intérieur 18 du véhicule 10 pour être amené vers la voie optique directe 28.

Selon une variante, la voie optique 28 est intégrée aux deux bras du support 26.

Dans tous les modes de réalisation précédents, une voie optique est intégrée dans un des bras ou dans les deux bras du support 26 du l'appareil de visée 12, ce qui permet d'obtenir un faisceau d'observation extérieur repris sur des oculaires.

Une telle voie optique 28 d'observation comporte un dérotateur 82 qui permet de conserver l'orientation de l'image obtenue aux endroits prédéfinis quelle que soit l'orientation de l'optique de collection 58 et quel que soit le mouvement de rotation du support 26 autour du premier axe Y1.

Cela permet de conserver des oculaires fixes pour observer une image d'orientation constante.

Une telle voie optique 28 permet d'utiliser différentes fonctions grâce à un commutateur 88 en interaction avec une pluralité d'unités 62 placées dans l'espace intérieur 16 du véhicule.

Cela permet d'étendre le nombre de fonctionnalités de l'appareil de visée 12 sans nuire à la stabilité de l'appareil de visée.

Une telle voie optique 28 permet d'obtenir un faisceau optique parallèle traversant le blindage. Cela permet de positionner l'appareil de visée à différentes hauteur en conservant l'image collectée, et permet également l'utilisation de lasers de puissance.

Une telle voie optique 28 d'observation directe présente des avantages physiologiques pour les opérateurs et permet de résoudre les éventuelles incertitudes contenues dans une image obtenue par observation indirecte de scènes extérieures.

Une telle voie optique 28 d'observation permet d'ajouter une fonction de visualisation directe gyrostabilisée qui n'implique pas une forte ouverture du blindage (de l'ordre de 100mm de diamètre). Cela permet de conserver une forte intégrité du véhicule 10 vis-à-vis des contraintes externes et de garantir une bonne maîtrise de l'étanchéité de la paroi 14.

Une telle voie optique 28 d'observation permet de conserver un seul appareil de visée 12 identique pour le chef d'équipage et l'opérateur, avec seulement un ajustement du transfert optique vers les oculaires en fonction de la place dans le char.

Une telle voie optique 28 d'observation facilite l'intégration de nouveaux capteurs à la tête optronique 24.

Une telle voie optique 28 d'observation permet de remédier à une défaillance de l'appareil de visée 12 en cas de panne ou défaillance électrique de la tête optronique 24 (mode secours).

De plus, le volume situé dans l'espace intérieur 16 est minimal, ce qui permet d'ajouter si cela est désiré par l'opérateur, des fonctions supplémentaires comme des écrans plus grands.

Cet appareil de visée 12 permet aussi, sans impact sur la stabilisation de la vision d'ajouter des lasers de brouillage ou de destruction et/ou d'autres caméras positionnées sur la paroi ou sous la paroi 14.

Un tel appareil de visée 12 stabilisé est dépourvu de capot suiveur et de hublot associé au capot, ce qui permet de réduire le coût l'encombrement.

La présente invention couvre toutes les combinaisons techniquement possibles des modes de réalisation qui viennent d'être présentés précédemment.

## Revendications

1. Appareil de visée (12) pour véhicule (10), le véhicule (10) comportant une paroi (14) délimitant un espace intérieur (16) d'un espace extérieur (18), l'appareil de visée (12) comportant :
- un support (26) monté rotatif par rapport à la paroi (14) autour d'un premier axe (Y1), le support (26) définissant un volume intérieur (30),
- une tête optronique (24) d'observation indirecte d'une première partie de l'environnement de l'espace extérieur (18) du véhicule (10), la tête optronique (24) étant montée rotative sur le support (26) autour d'un deuxième axe (X2), le deuxième axe (X2) étant perpendiculaire au premier axe (Y1),
- une voie optique (28) directe d'observation d'une deuxième partie de l'environnement de l'espace extérieur (18) du véhicule (10), la voie optique (28) comprenant :
- une optique de collection (58) propre à collecter une partie de l'environnement de l'espace extérieur (18) du véhicule (10), l'optique de collection (58) étant rotative autour du deuxième axe (X2), et
- un système optique de transport (60) propre à transporter l'image collectée par l'optique de collection (58) vers au moins un endroit prédéfini dans l'espace intérieur (16), le système optique de transport (60) comportant une pluralité de composants optiques, une partie des composants étant dans l'espace intérieur (16) et l'autre partie des composants étant dans le volume intérieur (30) du support (26),
- un entraînement (29) entraînant la tête optronique (24) et l'optique de collection (58) pour que, lorsque la tête optronique (24) effectue une rotation d'un premier angle donné autour du deuxième axe (X2), l'optique de collection (58) effectue une rotation d'un deuxième angle donné autour du deuxième axe (X2), le rapport entre les deux angles étant compris entre 0,99 et 1,01, de préférence égal à 1.

2. Appareil de visée selon la revendication 1, dans lequel l'optique de collection (58) est auto-inertielle vis-à-vis de la stabilisation autour de l'axe (X2).

3. Appareil de visée selon la revendication 1 ou 2, dans lequel il est défini pour l'image obtenue à l'endroit prédéfini une orientation, le système optique de transport (60) comprenant un dérotateur (82) agencé pour que l'image obtenue à l'endroit prédéfini présente la même orientation pour toutes les orientations possibles du support (26) et de l'entraînement (29).

4. Appareil de visée selon l'une quelconque des revendications 1 à 3, dans lequel, la voie optique directe (28) comporte au moins deux unités (62), chaque unité (62) assurant une fonction spécifique pour l'appareil de visée (12), chaque unité (62) ayant une entrée, le système optique de transport (60) comportant un commutateur (88) permettant de sélectionner l'un des endroits prédéfinis vers lesquels le système optique de transport (60) est propre à transporter l'image collectée par l'optique de collection (58) pour que chaque endroit prédéfini soit une entrée d'une unité (62) pour laquelle la fonction spécifique a été sélectionnée.

5. Appareil de visée selon la revendication 4, dans lequel les unités (62) assurant une fonction spécifique pour l'appareil de visée (12) sont choisies dans le groupe constitué de :
- une unité de visualisation,
- un oculaire,
- un monoculaire,
- un binoculaire (102),
- un écran organique (108),
- un laser (100), et
- une caméra.

6. Appareil de visée selon l'une quelconque des revendications 1 à 5, dans lequel le système de transport (60) est configuré pour que le faisceau optique entre les composants dans l'espace intérieur (16) et les composants dans le volume intérieur (30) soit un faisceau optique parallèle.

7. Appareil de visée selon l'une quelconque des revendications 1 à 6, dans lequel il est défini une direction en site (X) et une direction en gisement (Y), le premier axe (Y1) étant parallèle à la direction en gisement (Y) et le deuxième axe (X2) étant parallèle à la direction en site (X).

8. Véhicule (10) comportant un appareil de visée (12) selon l'une quelconque des revendications 1 à 7.

9. Véhicule (10) selon la revendication 8, dans lequel le système optique de transport (60) comporte un hublot (86), le hublot (86) ayant un diamètre inférieur ou égal à 100 millimètres utile optiquement, la paroi (14) comportant également le hublot (86), le hublot (86) assurant l'étanchéité de la paroi (14) vis-à-vis de l'espace extérieur (18).

## Patentansprüche

1. Visiervorrichtung (12) für ein Fahrzeug (10), wobei das Fahrzeug (10) eine Wand (14) aufweist, die einen Innenraum (16) von einem Außenraum (18) trennt, wobei die Visiervorrichtung (12) aufweist:
- ein Gestell (26), das um eine erste Achse (Y1) drehbar in Bezug auf die Wand (14) montiert ist, wobei das Gestell (26) ein Innenvolumen (30) begrenzt,
- einen optronischen Kopf (24) zur indirekten Beobachtung eines ersten Teils der Umgebung des Außenraums (18) des Fahrzeugs (10), wobei der optronische Kopf (24) um eine zweite Achse (X2) drehbar an dem Gestell (26) montiert ist, wobei die zweite Achse (X2) senkrecht zur ersten Achse (Y1) liegt,
- einen direkten optischen Pfad (28) der Beobachtung eines zweiten Teils der Umgebung des Außenraums (18) des Fahrzeugs (10), wobei der optische Pfad (28) umfasst:
- eine Sammeloptik (58), die geeignet ist, einen Teil der Umgebung des Außenraums (18) des Fahrzeugs (10) einzusammeln, wobei die Sammeloptik (58) um die zweite Achse (X2) drehbar ist und
- ein optisches Weiterleitungssystem (60), das geeignet ist, das von der Sammeloptik (58) eingesammelte Bild zu mindestens einer vordefinierten Stelle in dem Innenraum (16) weiterzuleiten, wobei das optische Weiterleitungssystem (60) eine Mehrzahl von optischen Komponenten aufweist, wobei ein Teil der Komponenten im Innenraum (16) liegt und der andere Teil der Komponenten in dem Innenvolumen (30) des Gestells (20) liegt,
- einen Antrieb (29), der den optronischen Kopf (24) und die Sammeloptik (58) antreibt, um, wenn der optronischen Kopf (24) eine Drehung um einen ersten gegebenen Winkel um die zweite Achse (X2) herum durchführt, die Sammeloptik (58) eine Drehung um einen gegebenen zweiten Winkel um die zweite Achse (X2) durchführt, wobei das Verhältnis der zwei Winkel zwischen 0,99 und 1,01 liegt, vorzugsweise gleich 1 ist.

2. Visiervorrichtung nach Anspruch 1, bei der die Sammeloptik (58) hinsichtlich der Stabilisierung um die Achse (A2) selbstinertial ist.

3. Visiervorrichtung nach Anspruch 1 oder 2, bei der für das an der vorbestimmten Stelle erhaltene Bild eine Orientierung definiert ist, wobei das optische Weiterleitungssystem (60) einen Derotator (82) umfasst, der so angeordnet ist, dass das an der vorbestimmten Stelle erhaltene Bild dieselbe Orientierung für alle möglichen Orientierungen des Gestells (26) und des Antriebs (29) aufweist.

4. Visiervorrichtung nach einem beliebigen der Ansprüche 1 bis 3, bei der der direkte optische Pfad (28) mindestens zwei Einheiten (62) aufweist, wobei jede Einheit (62) eine spezifische Funktion für die Visiervorrichtung (12) sicherstellt und jede Einheit (62) einen Eintritt aufweist, wobei das optische Weiterleitungssystem (60) einen Umschalter (88) aufweist, der eine Auswahl einer der vorbestimmten Stellen erlaubt, zu denen das optische Weiterleitungssystem (60) geeignet ist, das von der Sammeloptik (58) eingesammelte Bild weiterzuleiten, damit jede vorbestimmte Stelle ein Eintritt einer Einheit (62) ist, für die die spezifische Funktion ausgewählt wurde.

5. Visiervorrichtung nach Anspruch 4, bei der die Einheiten (62), die eine spezifische Funktion für die Visiervorrichtung (12) sicherstellen, aus einer Gruppe ausgewählt sind, die besteht aus:
- einer Visualisierungseinheit,
- einem Okular
- einem Monokular
- einem Binokular (102),
- einem organischen Schirm (108,
- einem Laser (100) und
- einer Kamera.

6. Visiervorrichtung nach einem beliebigen der Ansprüche 1 bis 5, bei dem das Weiterleitungssystem (60) konfiguriert ist, das optische Bündel zwischen den Komponenten im Innenraum (16) und den Komponenten im Innenvolumen (30) als paralleles optisches Bündel auszubilden.

7. Visiervorrichtung nach einem beliebigen der Ansprüche 1 bis 6, bei dem eine Ortsrichtung (X) und eine Peilrichtung (Y) definiert ist, wobei die erste Achse (Y1) parallel zur Peilrichtung (Y) und die zweite Achse (X2) parallel zur Standortsrichtung (X) ist.

8. Fahrzeug (10), das eine Visiervorrichtung (12) nach einem beliebigen der Ansprüche 1 bis 7 aufweist.

9. Fahrzeug (10) nach Anspruch 8, bei dem das optische Weiterleitungssystem (60) ein Sichtfenster (86) aufweist, wobei das Sichtfenster (86) einen optisch nutzbaren Durchmesser aufweist, der kleiner als oder gleich 100 mm ist, wobei die Wand (14) gleichfalls das Sichtfenster (86) aufweist und das Sichtfenster (86) die Dichtigkeit der Wand (14) gegenüber dem Außenraum (18) sicherstellt.

## Claims

1. A sighting device (12) for a vehicle (10), the vehicle (10) including a wall (14) delimiting an interior space (16) from an exterior space (18), the sighting device (12) including:
- a support (26) mounted rotating relative to the wall (14) around a first axis (Y1), the support (26) defining an interior volume (30),
- an optronic head (24) for indirect observation of a first part of the environment of the space (18) outside the vehicle (10), the optronic head (24) being mounted rotating on the support (26) around a second axis (X2), the second axis (X2) being perpendicular to the first axis (Y1),
- a direct optical path (28) for observation of a second part of the environment of the space (18) outside the vehicle (10), the optical path (28) comprising:
- a collecting optical unit (58) adapted to collect part of the environment of the space (18) outside the vehicle (10), the collecting optical unit (58) rotating around the second axis (X2), and
- an optical transport system (60) adapted to transport the image collected by the collecting optical unit (58) to at least one predefined location in the interior space (16), the optical transport system (60) including a plurality of optical components, part of the components being in the interior space (16) and the other part of the components being in the interior volume (30) of the support (26),
- a drive means (29) driving the optronic head (24) and the collecting optical unit (58) so that, when the optronic head (24) performs a rotation by a first given angle around the second axis (X2), the collecting optical unit (58) performs a rotation by a second given angle around the second axis (X2), the ratio between the two angles being between 0.99 and 1.01, preferably equal to 1.

2. The sighting device according to claim 1, wherein the collecting optical unit (58) is self-inertial with respect to the stabilization around the axis (X2).

3. The sighting device according to claim 1 or 2, wherein an orientation is defined for the image obtained in the predefined location, the optical transport system (60) comprising a twister (82) arranged so that the image obtained in the predefined location has the same orientation for all of the possible orientations of the support (26) and the drive means (29).

4. The sighting device according to any one of claims 1 to 3, wherein, the direct optical path (28) includes at least two units (62), each unit (62) performing a specific function for the sighting device (12), each unit (62) having an input, the optical transport system (60) including a switch (88) making it possible to select one of the predefined locations toward which the optical transport system (60) is adapted to transport the image collected by the collecting optical unit (58) so that each predefined location is an input of a unit (62) for which the specific function has been selected.

5. The sighting device according to claim 4, wherein the units (62) performing a specific function for the sighting device (12) and are chosen from the group made up of:
- a viewing unit,
- an eyepiece,
- a monocular,
- a binocular (102),
- an organic screen (108),
- and laser (100), and
- a camera.

6. The sighting device according to any one of claims 1 to 5, wherein the transport system (60) is configured so that the optical beam between the components in the interior space (16) and the components in the interior volume (30) are a parallel optical beam.

7. The sighting device according to any one of claims 1 to 6, wherein an elevation direction (X) and a relative bearing direction (Y) are defined, the first axis (Y1) being parallel to the relative bearing direction (Y) and the second axis (X2) being parallel to the elevation direction (X).

8. The vehicle (10) including a sighting device (12) according to any one of claims 1 to 7.

9. The vehicle (10) according to claim 8, wherein the optical transport system (60) includes a porthole (86), the porthole (86) having a diameter smaller than or equal to 100 optically useful millimeters, the wall (14) also including the porthole (86), the porthole (86) providing the tightness of the wall (14) with respect to the exterior space (18).
